# FASCICULE DE BREVET EUROPEEN

(11) **EP 0 981 982 B1**
(45) Date de publication et mention de la délivrance du brevet: **21.07.2004**
(21) Numéro de dépôt: 99401996.6
(22) Date de dépôt: 05.08.1999
(51) Int. Cl.: A47C 7/26, B29C 44/12

(54) **Procédé de fabrication d'un revêtement anti-lacération pour siège ou analogue et élément de siège comprenant ce revêtement**
Verfahren zur Herstellung eines nichtzerreissbaren Bezuges für einen Sitz, und Sitzelement mit solchem Bezug
A method of manufacturing an anti-laceration cover for a seat or the like and seat element with such cover

(30) Priorité: 28.08.1998 FR 9810855
(43) Date de publication de la demande: 01.03.2000
(73) Titulaire: Compin, 75017 Paris (FR)
(72) Inventeur: Andreux, Yves, 27300 Courbepine (FR)
(74) Mandataire: Ramey, Daniel

(56) Documents cités:
- EP-A- 0 190 064
- WO-A-94/18872
- AU-B- 591 030

## Description

L'invention concerne un procédé de fabrication d'un revêtement anti-lacération pour siège ou analogue, ainsi qu'un élément de siège comprenant ce revêtement.

Les revêtements anti-lacération des sièges (tels que des banquettes, des fauteuils, etc.) utilisés dans les lieux publics et dans les transports en commun, comprennent en général une armature métallique de renfort, formée par exemple d'une nappe de ressorts hélicoïdaux ou de lames ou bandes métalliques et collée sur une feuille ou une nappe de matière souple (textile ou plastique) qui constitue la face extérieure ou face d'aspect du revêtement.

Ces revêtements sont fabriqués à plat, de la façon suivante : pour le collage de l'armature, on dépose sur la feuille ou nappe souple une couche épaisse d'un élastomère silicone (relativement coûteux) ou d'une matière plastique telle que du PVC, dans laquelle l'armature est noyée et qui est ensuite polymérisée à chaud. On obtient ainsi une nappe plane multicouche qui résiste bien aux tentatives de lacération grâce à la présence de l'armature métallique, qui est bon marché et qui est utilisable sans garniture de mousse (donc sans risque de feu ou de dégagement de fumées toxiques) quand elle est tendue sur un cadre rigide, notamment pour former une assise ou un dossier de siège.

Toutefois, ce revêtement a une faible ou très faible capacité de déformation tridimensionnelle et ne peut prendre une forme arrondie ou galbée après fabrication, ce qui oblige à ne l'utiliser que pour des garnissages plats ou sensiblement plats, qui sont relativement inconfortables.

On pourrait augmenter la capacité de déformation de ce revêtement en réduisant le diamètre des fils métalliques ou de la dimension transversale des bandes métalliques qui constituent l'armature, mais cela rendrait alors le revêtement vulnérable aux tentatives de lacération.

Le document AU 591 030 B décrit des revêtements anti-lacération fabriqués à plat qui présentent les inconvénients mentionnés plus haut.

L'invention a pour but d'apporter une solution simple, efficace et peu coûteuse à ce problème, tout en évitant les inconvénients de la technique antérieure.

Elle a pour objet un procédé de fabrication d'un revêtement du type précité, qui résiste bien aux tentatives de lacération et auquel on peut donner une forme complexe, galbée et /ou incurvée autant que nécessaire.

Elle propose à cet effet un procédé de fabrication d'un revêtement anti-lacération pour siège ou analogue, ce revêtement comprenant une armature métallique de renfort collée par une matière adhésive sur une nappe de matière souple telle que du tissu par exemple, qui forme la face extérieure ou face d'aspect du revêtement, caractérisé en ce qu'il consiste à mettre en forme le revêtement au cours de sa fabrication et, pour cela, à disposer les différents constituants du revêtement les uns après les autres dans une partie de moule ayant la forme d'un élément de siège à revêtir, à fermer le moule, à chauffer pour fondre ou polymériser la matière adhésive, puis à laisser refroidir et à démouler le revêtement ainsi obtenu.

Selon l'invention, le revêtement n'est donc pas fabriqué à plat et est au contraire mis en forme au cours de sa fabrication, grâce à la capacité propre de déformation de chaque élément constitutif du revêtement. Cela ne pose aucune difficulté avec la nappe de matière souple qui forme la face extérieure ou face d'aspect du revêtement ni avec la matière adhésive que l'on peut déposer, appliquer ou projeter sur la nappe de matière souple.

En ce qui concerne l'armature de renfort, il est avantageux d'utiliser une armature formée d'un tricot de fils métalliques, par exemple à mailles du type jersey, qui peuvent glisser les unes sur les autres dans toutes les directions, ce qui confère à l'armature une très grande capacité de déformation.

Avantageusement, le fil métallique de cette armature a un diamètre supérieur à 0,5 mm environ et, de préférence, d'au moins 0,7 mm, ce qui rend l'armature très résistante aux tentatives de lacération.

La partie de moule au contact de l'armature de renfort peut comprendre un revêtement anti-adhérence résistant à l'abrasion.

A défaut, on recouvre l'armature de renfort d'un film de matière plastique ou de matière textile qui va protéger la paroi correspondante du moule d'une part de l'abrasion qui pourrait être causée par l'armature de renfort et d'autre part d'un collage avec la matière adhésive.

Si nécessaire, la nappe de matière souple formant la face d'aspect du revêtement est préformée : il peut s'agir par exemple d'une housse cousue à la forme de la partie de siège à revêtir.

L'invention propose également un procédé de fabrication d'un élément de siège ou analogue comprenant une garniture élastiquement déformable recouverte d'un revêtement anti-lacération, caractérisé en ce qu'il consiste à fabriquer par exécution du procédé selon l'une des revendications précédentes, un revêtement anti-lacérationd'une seule pièce ayant une forme tridimensionnelle adaptée à celle de la dite garniture et à poser le revêtement anti-lacération sur la garniture.

Cette garniture peut être formée d'une ou de plusieurs pièces en mousse (lorsque cela n'est pas contraire aux règlements de sécurité applicables) ou bien elle peut être formée d'une carcasse à ressorts ou de ressorts métalliques ensachés, ce qui a pour avantage de supprimer tout matériau combustible.

On obtient ainsi un élément de siège, tel qu'un coussin d'assise par exemple, qui est fabriqué de façon simple et économique, qui est conformé pour offrir un confort excellent et dont toute la surface visible est protégée contre les tentatives de lacération.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe d'un revêtement selon l'invention;
- la figure 2 est une vue schématique partielle à grande échelle de l'armature utilisée dans ce revêtement;
- la figure 3 est une vue schématique partielle en perspective d'un revêtement de siège selon l'invention;
- la figure 4 est une vue schématique en coupe d'un moule de fabrication de ce revêtement et illustre une étape de la fabrication.

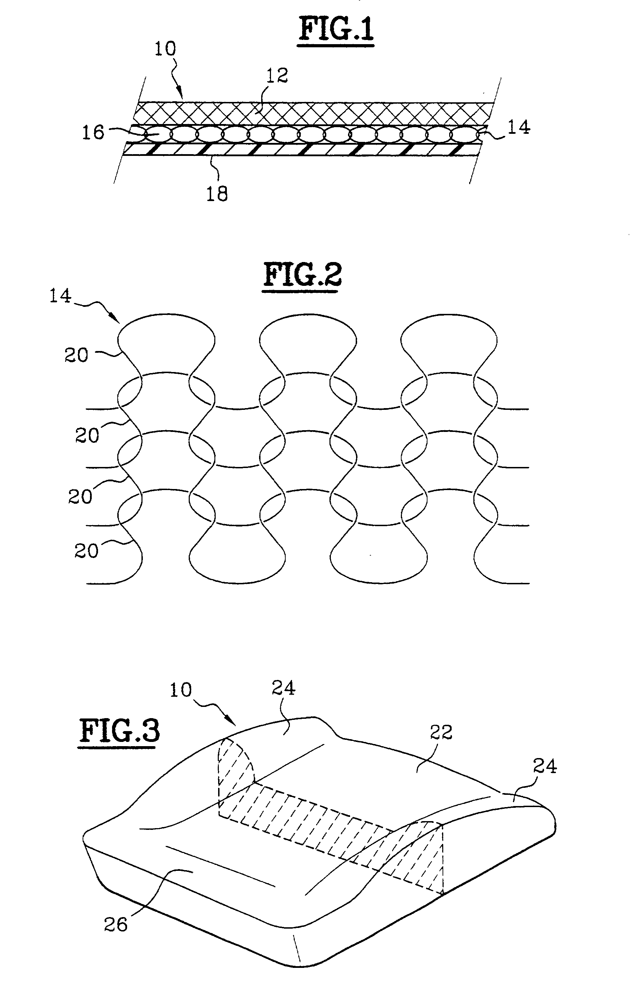

On se réfère d'abord à la figure 1, qui représente schématiquement en coupe une partie du revêtement selon l'invention.

Ce revêtement 10 est essentiellement constitué d'une nappe ou d'une feuille 12 de matière souple, destinée à former la face extérieure ou face d'aspect du revêtement et qui peut être une nappe textile ou une feuille de matière plastique ou analogue, sur laquelle est fixée par collage une armature métallique 14 plus ou moins noyée dans une matière adhésive 16 et recouverte éventuellement d'une feuille 18 de matière textile ou d'un film de matière plastique.

Avantageusement et comme représenté à très grande échelle en figure 2, l'armature 14 est formée d'un tricot de fils métalliques 20 à mailles du type jersey ou analogue, donnant une grande souplesse et une grande capacité de déformation à l'armature. Typiquement, les fils métalliques 20 sont des fils d'acier galvanisé ayant un diamètre de l'ordre de 0,7 mm et les mailles ont une dimension de l'ordre du centimètre, ce qui confère à l'armature 14 une très grande résistance aux tentatives de lacération.

Contrairement à ce qui est prévu dans la technique antérieure, les composants du revêtement selon l'invention ne sont pas d'abord assemblés les uns aux autres à plat, puis fixés sur un cadre ou posés sur une garniture élastiquement déformable, ils sont au contraire conformés individuellement et indépendamment les uns des autres avant d'être assemblés comme cela va être décrit en détail dans ce qui suit. On peut ainsi réaliser un revêtement tel que celui représenté en figure 3, qui constitue une coiffe ayant une forme tridimensionnelle adaptée à celle de la partie de siège à recouvrir.

Dans l'exemple de la figure 3, le revêtement 10 est destiné à un coussin d'assise et comprend une partie centrale 22 de forme convexe, deux parties latérales 24 qui s'étendent en oblique vers le haut par rapport à la partie centrale 22 et donnent une forme générale concave au revêtement, et une extrémité avant 26 qui est de forme convexe, l'ensemble des parties latérales 24 et de l'extrémité avant 26 formant une sorte de rebord en saillie ou de gros bourrelet entourant la partie centrale convexe 22 du coussin.

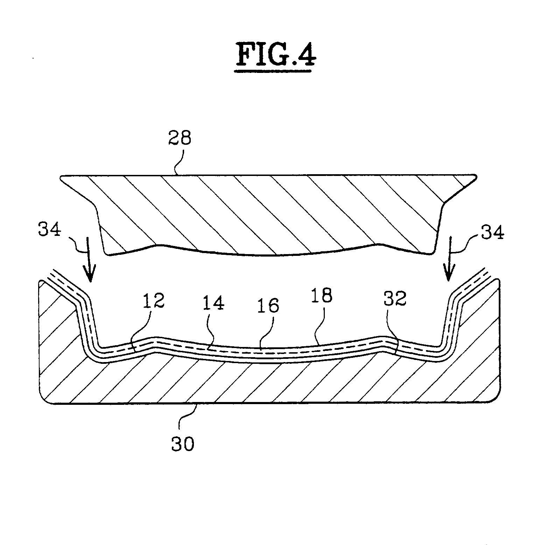

Un revêtement ainsi conformé peut être réalisé d'une seule pièce dans le moule représenté schématiquement en figure 4, ce moule comprenant deux parties 28, 30 délimitant entre elles un volume de moulage à la forme précitée du revêtement à réaliser.

Le procédé de fabrication de ce revêtement est le suivant :

La nappe 12 et l'armature 14 étant préalablement coupées aux dimensions voulues, on commence par poser la nappe 12 de matière souple sur la partie inférieure 30 du moule, cette nappe 12 pouvant épouser étroitement la forme de cette partie de moule en raison de sa souplesse (ou éventuellement en raison d'une mise en forme préalable).

On dépose ensuite sur la nappe 12 une couche de matière adhésive 16 par tout moyen approprié (enduction, projection, etc.), la matière adhésive 16 pouvant être un élastomère cru (tel qu'un silicone non réticulé par exemple) ou une matière thermofusible ou encore une matière polymérisable à chaud (telle qu'un polyuréthanne par exemple).

On pose ensuite sur la nappe 12 et la matière adhésive 16 l'armature 14 qui, grâce à sa capacité de déformation et à sa souplesse, s'adapte bien à la forme de la partie inférieure 30 du moule, puis on ferme le moule par descente de la partie supérieure 28 sur la partie inférieure 30, on chauffe pour provoquer la réticulation de la matière adhésive 16 (ou sa fusion ou sa polymérisation selon les cas), on laisse refroidir, on ouvre le moule, on démoule et on coupe les excédents périphériques de matière comme indiqué en 34 pour obtenir le revêtement ayant la forme tridimensionnelle représentée en figure 3.

En variante, on peut appliquer sur la face interne de la partie supérieure 28 du moule un revêtement anti-abrasion et anti-adhérence, ce qui permet de ne pas utiliser le film ou la feuille 18 de protection.

Dans une autre variante, on peut utiliser la partie 28 du moule comme partie inférieure et la partie 30 comme partie supérieure et on commence alors par poser le film 18 de protection sur la partie 28 du moule, puis on pose l'armature 14 sur le film 18 et si nécessaire, on ferme provisoirement le moule pour une bonne mise en place du film 18 et de l'armature 14 sur la partie 28 du moule. On ouvre ensuite le moule, on dépose sur l'armature 14 une couche de la matière adhésive 16 précitée, on pose sur cette couche la nappe 12 de matière souple qui va former la face d'aspect du revêtement, on ferme le moule comme indiqué précédemment, on chauffe pour réticuler (ou fondre ou polymériser selon les cas) la matière adhésive, on laisse refroidir, on démoule et on coupe les excédents périphériques de matière pour obtenir le revêtement de la figure 3.

Le revêtement ainsi obtenu est à peu près auto-portant lorsqu'il est tenu à sa périphérie.

On peut l'utiliser avec une garniture élastiquement déformable d'un type quelconque, telle qu'une ou des pièces de mousse ou une carcasse à ressorts, ou des ressorts ensachés.

Si nécessaire, et lorsque les formes de revêtement à réaliser sont complexes, on peut utiliser une housse préformée, par exemple cousue, à la place de la nappe souple 12 dans le moule.

On peut également, si nécessaire, utiliser une armature 14 qui a été préformée, par exemple par emboutissage.

On peut aussi assurer une bonne mise en place de la nappe souple 12 et du film ou de la feuille 18 dans le moule par aspiration, pour plaquer la nappe 12 et le film 18 sur les faces internes des parties de moule 28, 30, mais cela suppose que la nappe 12 soit étanche ou imperméable à l'air, ce qui peut résulter de sa nature ou d'une enduction d'une matière souple appropriée (du silicone par exemple).

## Revendications

1. Procédé de fabrication d'un revêtement anti-lacération pour siège ou analogue, ce revêtement comprenant une armature métallique de renfort (14) collée par une matière adhésive (16) sur une nappe (12) de matière souple telle que du tissu par exemple, qui forme la face extérieure ou face d'aspect du revêtement (10), **caractérisé en ce qu'**il consiste à mettre en forme le revêtement au cours de sa fabrication et, pour cela, à disposer les différents constituants (12, 14, 16) du revêtement les uns après les autres dans une partie de moule (28, 30) à la forme d'un élément de siège à revêtir, à fermer le moule, à chauffer pour fondre ou polymériser la matière adhésive (16), puis à laisser refroidir et à démouler le revêtement (10) ainsi obtenu.

2. Procédé selon la revendication 1, **caractérisé en ce que** l'armature de renfort (14) est un tricot de fils métalliques, par exemple à mailles jersey.

3. Procédé selon la revendication 1 ou 2, **caractérisé en ce que** le fil a un diamètre supérieur à 0,5 mm environ et par exemple d'au moins 0,7 mm.

4. Procédé selon l'une des revendications précédentes, **caractérisé en ce que** la partie de moule (28) en contact avec l'armature de renfort (14) comprend un revêtement anti-adhérence résistant à l'abrasion.

5. Procédé selon l'une des revendications 1 à 3, **caractérisé en ce qu'**on recouvre l'armature de renfort (14) d'un film (18) de matière plastique ou d'une feuille de matière textile.

6. Procédé selon l'une des revendications précédentes, **caractérisé en ce que** ladite nappe (12) de matière souple est préformée et est constituée par exemple d'une housse cousue à la forme de l'élément de siège à réaliser.

7. Procédé selon l'une des revendications précédentes, **caractérisé en ce que** l'armature de renfort (14) est préformée, par exemple par emboutissage.

8. Procédé de fabrication d'un élément de siège ou analogue comprenant une garniture élastiquement déformable recouverte d'un revêtement anti-lacération, **caractérisé en ce qu'**il consiste à fabriquer, par exécution du procédé selon l'une des revendications précédentes, un revêtement anti-lacération d'une seule pièce ayant une forme tridimensionnelle adaptée à celle de ladite garniture et à poser le revêtement anti-lacération (10) sur la garniture.

9. Procédé selon la revendication 8, **caractérisé en ce que** la garniture est formée d'une ou plusieurs pièces en mousse ou d'une carcasse à ressorts, ou de ressorts ensachés.

## Patentansprüche

1. Verfahren zur Herstellung eines nicht zerreißbaren Bezugs für einen Sitz oder Analoges, wobei dieser Bezug eine metallische Verstärkungsbewehrung (14) umfasst, die durch einen Klebstoff (16) auf eine Schicht (12) aus weichem Material geklebt ist, wie zum Beispiel einem Gewebe, das die Außenseite oder Sichtseite des Bezugs (10) bildet, **dadurch gekennzeichnet, dass** es umfasst: in Form bringen des Bezugs im Verlauf seiner Herstellung und hierzu Anwenden verschiedener Bestandteile (12, 14, 16) des Bezugs nach einander in einem Formteil (28, 30), das die Form eines zu beziehenden Sitzelements aufweist, Schließen der Form, Erwärmen zum Schmelzen oder Polymerisieren des Klebstoffs (16), dann Abkühlen lassen und Herausnehmen des so erhaltenen Bezugs (10).

2. Verfahren nach Anspruch 1, **dadurch gekennzeichnet, dass** die Verstärkungsbewehrung (14) eine Maschenware aus Metallfäden ist, zum Beispiel mit Jerseymaschen.

3. Verfahren nach Anspruch 1 oder 2, **dadurch gekennzeichnet, dass** der Faden einen Durchmesser von mehr als ungefähr 0,5 mm aufweist und zum Beispiel mindestens 0,7 mm.

4. Verfahren nach einem der vorhergehenden Ansprüche, **dadurch gekennzeichnet, dass** das Formteil (28) in Kontakt mit der Verstärkungsbewehrung (14) eine gegen Abrieb beständige Antihaftbeschichtung umfasst.

5. Verfahren nach einem der Ansprüche 1 bis 3, **dadurch gekennzeichnet, dass** die Verstärkungsbewehrung (14) mit einem Film (18) aus Kunststoffmaterial oder einer Bahn aus Textilmaterial bedeckt wird.

6. Verfahren nach einem der vorhergehenden Ansprüche, **dadurch gekennzeichnet, dass** die Schicht (12) aus weichem Material vorgeformt wird und zum Beispiel aus einem Überzug in Form des auszubildenden Sitzelements gebildet wird.

7. Verfahren nach einem der vorhergehenden Ansprüche, **dadurch gekennzeichnet, dass** die Verstärkungsbewehrung (14) vorgeformt wird, zum Beispiel durch Ziehen.

8. Verfahren zur Herstellung eines Sitzelements oder Analoges umfassend eine mit einem nicht zerreißbaren Bezug bedeckte elastisch verformbare Füllung, **dadurch gekennzeichnet, dass** es umfasst: Herstellen, durch Ausführen des Verfahrens nach einem der vorhergehenden Ansprüche, eines nicht zerreißbaren Bezugs in einem einzigen Stück, das eine dreidimensionale Form aufweist, die an die der genannten Füllung angepasst ist, und Anbringen des nicht zerreißbaren Bezugs (10) auf die Füllung.

9. Verfahren nach Anspruch 8, **dadurch gekennzeichnet, dass** die Füllung aus einem oder mehreren Schaumteilen oder einem Gerüst aus Federn oder Taschenfedern gebildet wird.

## Claims

1. A method of manufacturing a slash-proof covering for a seat or the like, the covering including metal reinforcement (14) that is bonded by an adhesive (16) onto a web (12) of flexible material such as woven fabric, for example, which forms the outside face or visible face of the covering (10), the method being **characterized in that** it consists in shaping the covering during its manufacture, and to do this, it consists: in disposing the various components (12, 14, 16) of the covering one after the other in a mold portion (28, 30) in the shape of a seat element to be covered; in closing the mold; in heating, so as to melt or cure the adhesive (16); then in allowing the covering to cool; and in unmolding the covering (10) obtained in this way.

2. A method according to claim 1, **characterized in that** the reinforcement (14) is a wire knit, e.g. in plain stitch.

3. A method according to claim 1 or claim 2, **characterized in that** the wire has a diameter that is greater than approximately 0.5 mm, and is at least 0.7 mm, for example.

4. A method according to any preceding claim, **characterized in that** the mold portion (28) that is in contact with the reinforcement (14) has a non-stick covering that is resistant to abrasion.

5. A method according to any one of claims 1 to 3, **characterized in that** the reinforcement (14) is covered by a film (18) of plastics material or by a sheet of textile material.

6. A method according to any preceding claim, **characterized in that** said web (12) of flexible material is preformed and is constituted by a cover, for example, sewn in the shape of the seat element to be made.

7. A method according to any preceding claim, **characterized in that** the reinforcement (14) is preformed, e.g. by stamping.

8. A method of manufacturing a seat element or the like comprising an elastically deformable lining covered by a slash-proof covering, the method being **characterized in that**, by carrying out the method according to any preceding claim, it consists in manufacturing a slash-proof covering in a single piece, having a 3D shape that matches the shape of said lining; and in placing the slash-proof covering (10) on the lining.

9. A method according to claim 8, **characterized in that** the lining is formed by one or more pieces of foam, or by a spring frame, or by box springs.
